# EUROPEAN PATENT APPLICATION

(11) **EP 4 420 872 A1**
(43) Date of publication of application: **28.08.2024**
(21) Application number: 24157715.4
(22) Date of filing: 15.02.2024
(51) Int. Cl.: B32B 3/06, B32B 3/08, B32B 3/26, B32B 15/085, B32B 15/20, B32B 27/10, B32B 27/32

(54) **A MULTILAYER SHEET OF PACKAGING MATERIAL FOR PRODUCING A SEALED A PACKAGE**

(30) Priority: 21.02.2023 IT 202300002940
(71) Applicant: Tetra Laval Holdings & Finance S.A., 1009 Pully (CH)
(72) Inventor: PALLAORO, Giovanni, 41123 Modena (IT); INSERO, Marco, 41123 Modena (IT); BARBIERI, Marcello, 41123 Modena (IT); MARTINI, Pietro, 41123 Modena (IT)
(74) Representative: Tetra Pak - Patent Attorneys SE

(57) **Abstract**

A multilayer sheet of packaging material (M) for producing a sealed package (1) of a pourable food product comprises: at least one base layer (10) for imparting stiffness; a plurality of lamination layers (11) applied to and covering both sides of said base layer (10); a pre-laminated opening (12) configured to receive an opening device for outpouring the pourable food product; a line of weakness (13) in said base layer (10).

## Description

### TECHNICAL FIELD

The present invention relates to a multilayer sheet packaging material for producing sealed packages of pourable food products.

As is known, many pourable food products, such as fruit juice, UHT (ultra-high-temperature treated) milk, wine, tomato sauce, etc., are sold in packages made of sterilized packaging material. A typical example is the parallelepipedshaped package for liquid or pourable food products known as Tetra Brik Aseptic (registered trademark), which is made by folding and sealing laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material, e.g. an aluminium foil, which is superimposed on a layer of heat-seal plastic material, and is in turn covered with another layer of heat-seal plastic material forming the inner face of the package eventually contacting the food product. Packages of this sort are normally produced on fully automatic packaging machines, on which a continuous tube is formed from the web-fed packaging material; the web of packaging material is sterilized on the packaging machine, e.g. by applying a chemical sterilizing agent, such as a hydrogen peroxide solution, which, once sterilization is completed, is removed from the surfaces of the packaging material, e.g. evaporated by heating; the web so sterilized is then maintained in a closed, sterile environment, and is folded and sealed longitudinally to form a tube, which is fed vertically. In order to complete the forming operations, the tube is filled with the sterilized or sterile-processed food product, and is sealed and subsequently cut along equally spaced cross sections; pillow packs are so obtained, which are then folded mechanically to form respective finished packages. Alternatively, the packaging material may be cut into blanks, which are formed into packages on forming spindles, and the packages are then filled with the food product and sealed. One example of this type of package is the so-called "gable-top" package known by the trade name Tetra Rex (registered trademark).

To open the above packages, these are normally provided with a removable portion, which is partly detached by an opening device from the rest of the packaging material to free a pour opening through which to pour out the product. The removable portion is formed on the packaging material prior to folding and sealing the packaging material to form the finished package.

The removable portion normally comprises a so-called "prelaminated" hole, i.e. a hole formed through the base layer only of the packaging material and covered, when the material is laminated, with the layers of heat-seal plastic material and barrier material, which adhere to one another at the hole. The "prelaminated" hole is normally circular, although other shapes may be foreseen as disclosed in patent documents EP2287082A1 and EP3260386A1 in the name of Tetra Laval.

Normally, the package comprises an opening device comprising a frame, defining a spout and fitted about the removable portion of the package, a removable cap, screwed to the outside of the frame to close the spout, and a substantially tubular cylindrical cutter, screwed inside the frame and configured to rupture the removable portion during first aperture of the package. Normally, such opening devices are made of plastic material.

Recently, research is focusing on reducing plastic consumption in order to increase sustainability of packages.

In particular, research is focusing on providing reusable opening devices that may be used several times, for several packages. In this case, the packages are not provided with an opening device applied thereto. The final consumer needs to firstly apply the opening device to the package, then outpour the liquid product and, once the package is empty, remove the opening device to use it again on another package.

Hence, need is felt to provide a package which is suitable to receive a re-usable opening device. In particular, need is felt to provide a package having a pre-laminated opening which allows to tightly receive a re-usable opening device, so that during outpour of the liquid product, no drops of liquid product drip along the package.

In addition, need is felt to provide a package having a pre-laminated opening for receiving a re-usable opening device wherein the pre-laminated opening can be cleanly cut by the cutter of the opening device, with no fraying interfering with pout-out of the food product.

In addition, need is felt to provide a package having a pre-laminated opening for receiving a re-usable opening device wherein the pre-laminated opening does not inadvertently rupture during storage and transportation of the package.

### DISCLOSURE OF INVENTION

It is therefore an aim of the present invention to provide a multilayer sheet of packaging material, for producing sealed packages of pourable food products, which overcomes one or more of the aforementioned drawbacks. Also, it is aim of the present invention to provide a sealed package of pourable food product which overcomes one or more of the aforementioned drawbacks.

These aims are fully achieved by the multilayer sheet of packaging material and by the sealed package according to the appended claims.

### BRIEF DESCRIPTION OF THE DRAWINGS

Two non-limiting embodiments of the present invention will be described by way of example with reference to the accompanying drawings, in which:

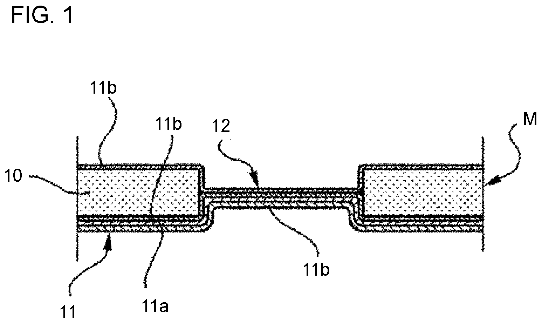

Figure 1 illustrates a cross-sectional view of a multilayer sheet of packaging material according to the present disclosure;
Figure 2A illustrates a sealed package according to an embodiment of the present disclosure;
Figure 2B illustrates a multilayer sheet of packaging material for producing the sealed package of figure 2A;
Figure 2C illustrates an enlarged detail of Figure 2B;
Figure 3A illustrates a sealed package according to an embodiment of the present disclosure;
Figure 3B illustrates a multilayer sheet of packaging material for producing the sealed package of figure 3A;
Figure 3C illustrates an enlarged detail of Figure 3B;
Figure 4A illustrates a sealed package according to an embodiment of the present disclosure;
Figure 4B illustrates a multilayer sheet of packaging material for producing the sealed package of figure 4A;
Figure 5A illustrates a sealed package according to an embodiment of the present disclosure;
Figure 5B illustrates a multilayer sheet of packaging material for producing the sealed package of figure 5A;
Figure 6A illustrates a sealed package according to an embodiment of the present disclosure;
Figure 6B illustrates a multilayer sheet of packaging material for producing the sealed package of figure 6A;
Figures 7-13 illustrate respective details of a multilayer sheet of packaging material according to further embodiments of the present disclosure.

### BEST MODES FOR CARRYING OUT THE INVENTION

Number 1 indicates as a whole a sealed package for pourable food products, which is made of multilayer sheet packaging material M and is designed to receive an opening device for outpouring the pourable food product. In particular, the sealed package 1 is designed to receive a re-usable opening device on a top portion or top wall of package 1. Preferably, the opening device includes a cutter configured to rupture a pre-laminated opening 12 so as to define a pour opening.

In a non-limiting example, opening device is of the type described in EP3260386A1. It should also be noted that other opening devices may be used. In particular, re-usable opening device may be used, which are applicable to the sealed package by the final consumer and are removable once the package is empty, to be applicable to another package.

Package 1 may be a parallelepiped- or prismatic-shaped packages, or a "gable-top" package. According to a non-limiting embodiment, package 1 has the parallelepiped shape described in WO2015/169656A1.

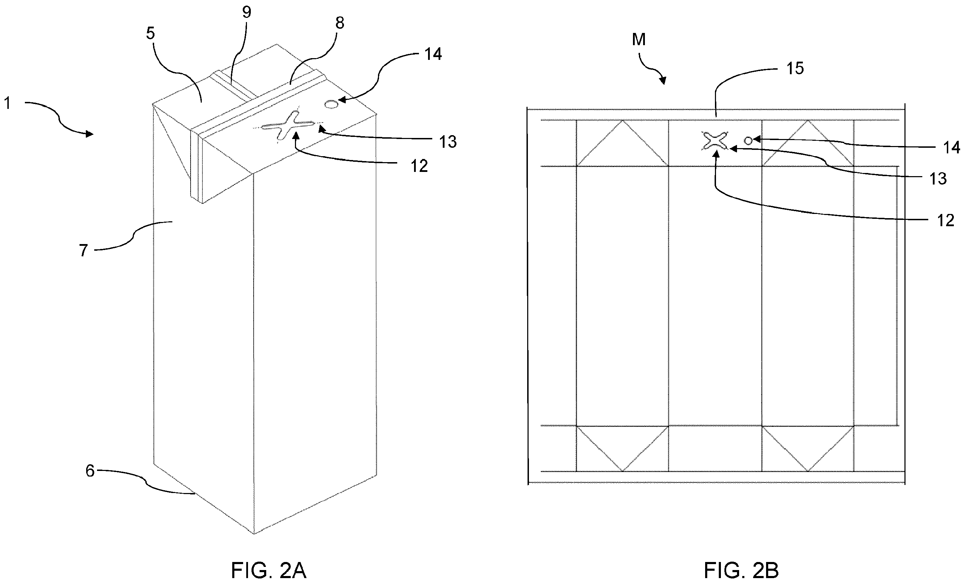

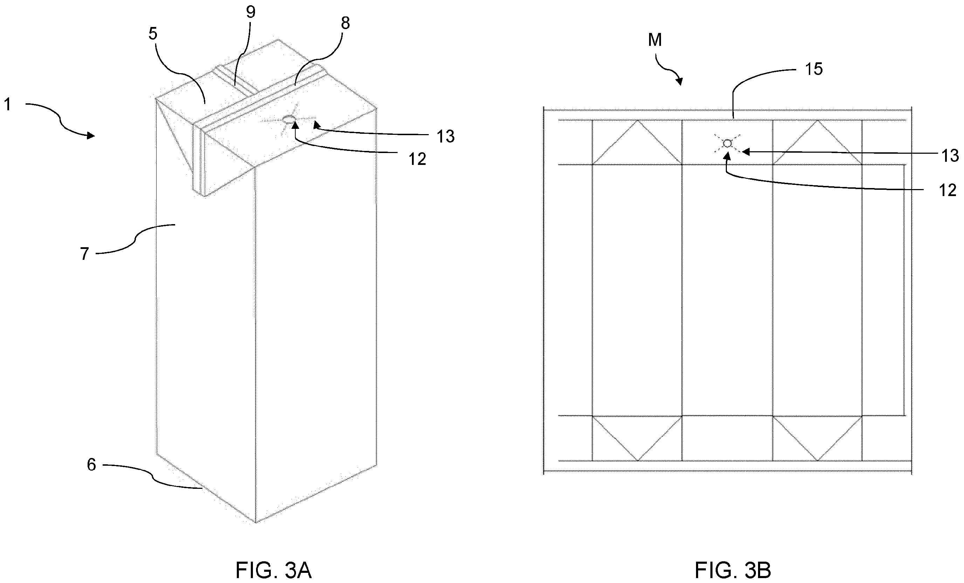

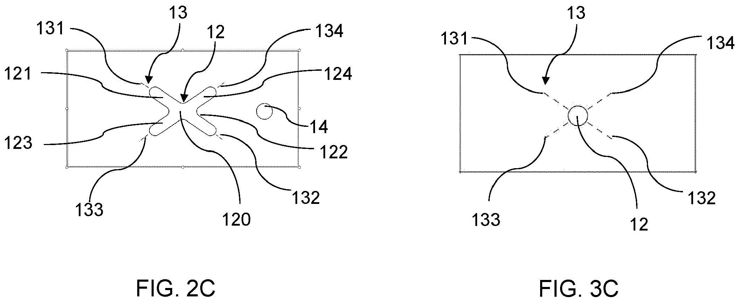

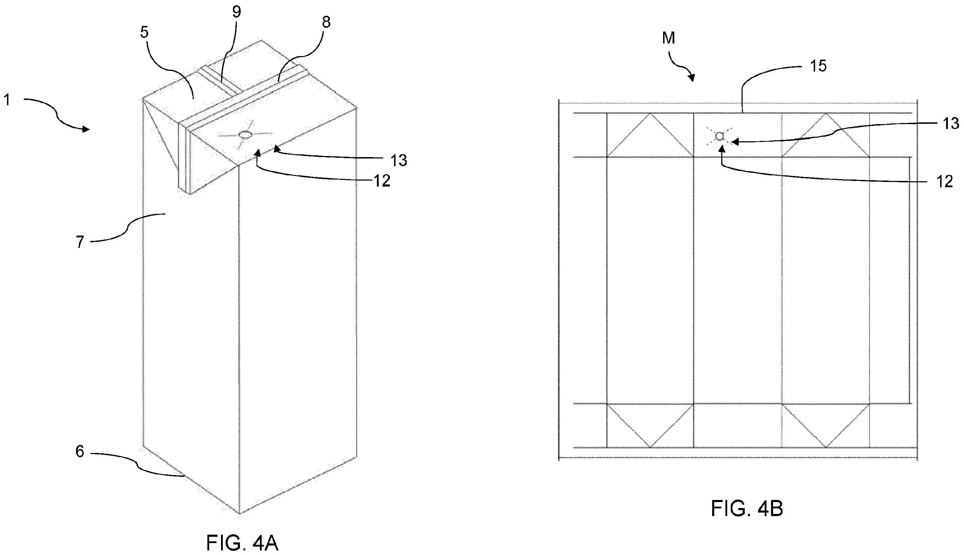

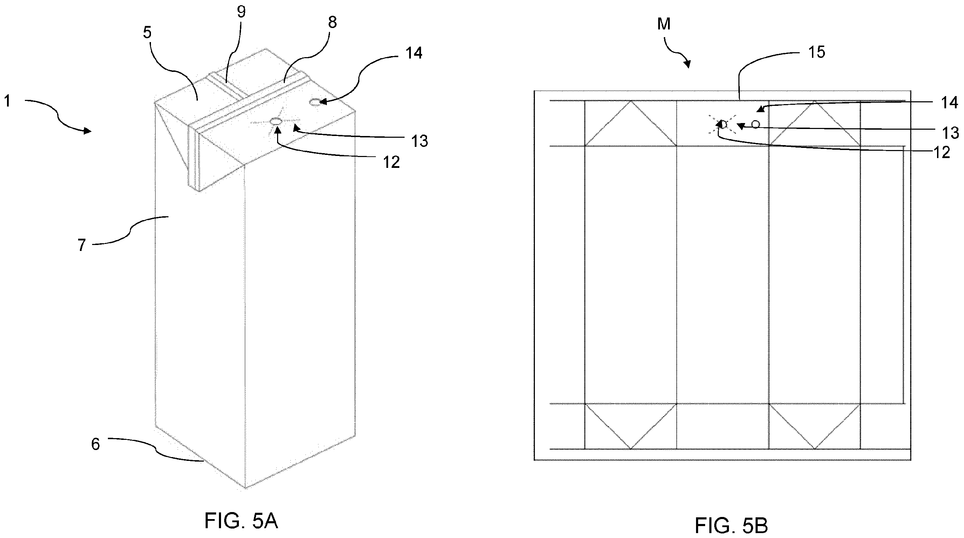

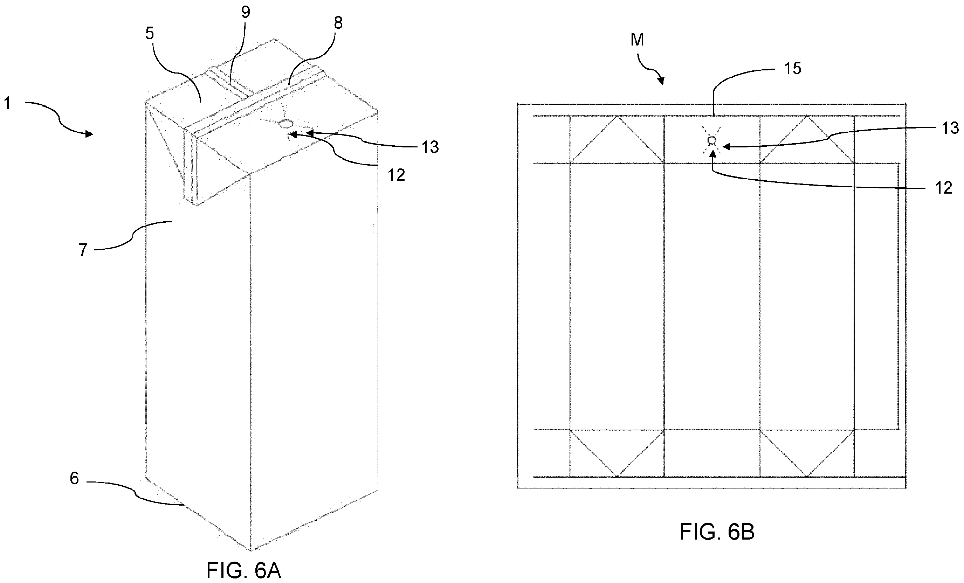

With reference to Figures 2A, 3A, 4A, 5A, 6A, package 1 comprises a quadrilateral (in the example shown, rectangular or square) top wall 5, a quadrilateral (in the example shown, rectangular or square) bottom wall 6, four lateral walls 7, extending between top wall 5 and bottom wall 6. The opening device is configured to be applied to the top wall 5.

Preferably, package 1 comprises a transversal sealing line 8 across the top wall 5 and a further transversal sealing line, not visible in the figures, across the bottom wall 6. Preferably, package 1 comprises a longitudinal sealing line 9 perpendicular to the transversal sealing line 8.

The packaging material M for producing the sealed package 1 has a multilayer structure comprising at least one base layer 10, e.g. made of paper, configured for imparting stiffness, and a plurality of lamination layers 11 applied to and covering both sides of base layer 10.

In the example shown, lamination layers 11 include a layer 11a made of oxygen-barrier material, e.g. an aluminum foil, and a number of layers 11b of heat-seal plastic material covering both sides of both base layer 10 and layer 11a. In other words, the packaging material comprises, in succession and from the side eventually forming the inside of package 1, a layer 11b of heat-seal plastic material, a layer 11a of oxygen-barrier material, another layer 11b of heat-seal plastic material, base layer 10, and another layer 11b of heat-seal plastic material.

The inner layer 11b of heat-seal plastic material contacting the food product, in use, may, for example, be made of strong, in particular, high-stretch, metallocenecatalyzed, low-linear-density (LLD) polyethylene.

Normally, layers 11b of heat-seal plastic material are laminated on the base layer 10 and/or oxygen-barrier material layer 11a in a melted state, with successive cooling.

As a possible alternative, at least the inner layers of plastic material 11b may be provided as prefabricated films, which are laminated on base layer 10 and/or oxygen-barrier material layer 11a; this technique allows to reduce any risk of formation of holes or cracks at or around removable portion during the forming operations for producing sealed package 1.

Figures 2B, 3B, 4B, 5B, 6B show a basic unit of packaging material M, by which to produce package 1, and which may be a precut blank, or a portion of a web of packaging material M comprising a succession of units.

In the first case, the basic unit is folded on a known folding spindle (not shown), is filled with the food product, and is sealed at the top to form package 1. In the second case, the web of packaging material, comprising a succession of basic units, is: folded into a cylinder to form a vertical tube; filled continuously with the food product; and sealed transversely and cut into basic units, which are then folded to form respective packages 1.

Basic unit of packaging material M has a crease pattern, i.e. a number of crease lines 15 defining respective fold lines, along which the packaging material M is folded to form the finished package 1.

In the example shown, crease pattern comprises first fold lines, extending horizontally, second fold lines, extending vertically (i.e. perpendicularly to the first fold lines), and third fold lines, sloping (at an acute angle) with respect to first and second fold lines. Fold lines define, in known manner, the edges between the various walls of the formed package 1.

The packaging material M further comprises a pre-laminated opening 12 which is formed by a through slot provided in said base layer 10 and covered by one or more of said lamination layers 11. The pre-laminated opening 12 is configured to receive an opening device (in particular, a re-usable opening device) for outpouring the pourable food product from the package 1. In particular, under the action of a cutter of the opening device, the removable portion can be detached partly from the rest of packaging material M so to define a pour opening.

Preferably, the pre-laminated opening 12 is formed on packaging material M prior to folding and sealing the packaging material M to form the package 1.

Preferably, the packaging material M further comprises a line of weakness 13 in said base layer 10. In other words, the base layer 10 has a line of weakness 13. In a preferred embodiment, said line of weakness 13 is defined by a cut in the base layer 10. In particular, in a preferred embodiment, in an unruptured condition of the pre-laminated opening 12, the pre-laminated opening 12 is completely covered by said one or more lamination layers 11 and the base layer 10 is at least partially cut along said line of weakness 13. Preferably, along said line of weakness 13 the base layer 10 is cut dotted. Preferably, the line of weakness 13 has a depth in said base layer 10 that is smaller than a thickness of the base layer. In other words, the line of weakness 13 is preferably defined by a not-through cut in the base layer 10. It is noted that, preferably, the line of weakness 13 is obtained by cutting the base layer 10 prior to coupling the base layer 10 with the lamination layers 11.

The line of weakness 13 provides a guidance for the opening device during first aperture of the package 1. In particular, the opening device is inserted through the pre-laminated opening 12 such that the lamination layers 11 covering the pre-laminated opening 12 are ruptured so to form the pouring hole. Furthermore, the pouring hole is enlarged by also rupturing the base layer 10 along the line of weakness 13. In such a way, the formation of the pouring hole is finely controlled, and the final size and shape of the pouring hole are finely predictable. As a result, the opening device will tightly adhere to the packaging material M.

Preferably, said plurality of lamination layers 11 includes at least a first lamination layer applied to a first side of the base layer 10 and a second lamination layer 12 applied to a second side of the base layer 11. For example, the first lamination layer may include said oxygen-barrier layer 11a and/or one heat-seal plastic material layer 11b; the second lamination layer may include another heat-seal plastic material layer 11b. At the pre-laminated opening 12, the first lamination layer and the second lamination layer are sealed together.

Preferably, the line of weakness 13 includes at least a portion that extends, in plant view, from a border of the pre-laminated opening 12 to an area of the sheet out of the pre-laminated opening 12. In this context, plant view means when observing the planar sheet of packaging material from a direction perpendicular to the plane defined by the planar sheet. In other words, said at least a portion extends parallel to a plane defined by the sheet of packaging material. In particular, said at least a portion of the line of weakness 13 has a first end closer to (in particular, superposed with) the border of the pre-laminated opening 12 and a second end, opposite to the first end, which is distanced from the pre-laminated opening 12.

According to one or more embodiments, said line of weakness 13 includes at least a first portion 131 and a second portion 132. Said first portion 131 and second portion 132 define said at least a portion of the line of weakness. Said first portion 131 and second portion 132 extend from the pre-laminated opening 12 (preferably, in opposite directions), wherein the pre-laminated opening 12 is interposed between the first portion 131 and the second portion 132. Preferably, each one of the first portion 131 and second portion 132 extends from the border of the pre-laminated opening 12 to respective areas of the sheet distanced from the pre-laminated opening 12.

Said line of weakness 13 may further include a third portion 133 extending from the pre-laminated opening 12. Said line of weakness 13 may further include a fourth portion 134 extending from the pre-laminated opening 12. In this case, preferably, the pre-laminated opening 12 is further interposed between the third portion 133 and the fourth portion 134. In particular, the first portion, 131, second portion 132, third portion 133 and (if present) fourth portion 134 are angularly distanced from each other around the pre-laminated opening 12.

According to some embodiments of the present disclosure, illustrated in Figures 2A-2C, 3A-3C, 4A-4B, 5A-5B, 6A-6B, 7, 8, 9, 12, 13, the line of weakness 13 includes four portions positioned in a X configuration. In these embodiments, the first portion 131 and the second portion 132 of the line of weakness 13 are aligned along a first straight line, and the third portion 133 and the fourth portion 134 of the line of weakness 13 are aligned along a second straight line. The first straight line and the second straight line are incident to each other and the pre-laminated opening 12 is located at the crossing between the first straight line and the second straight line.

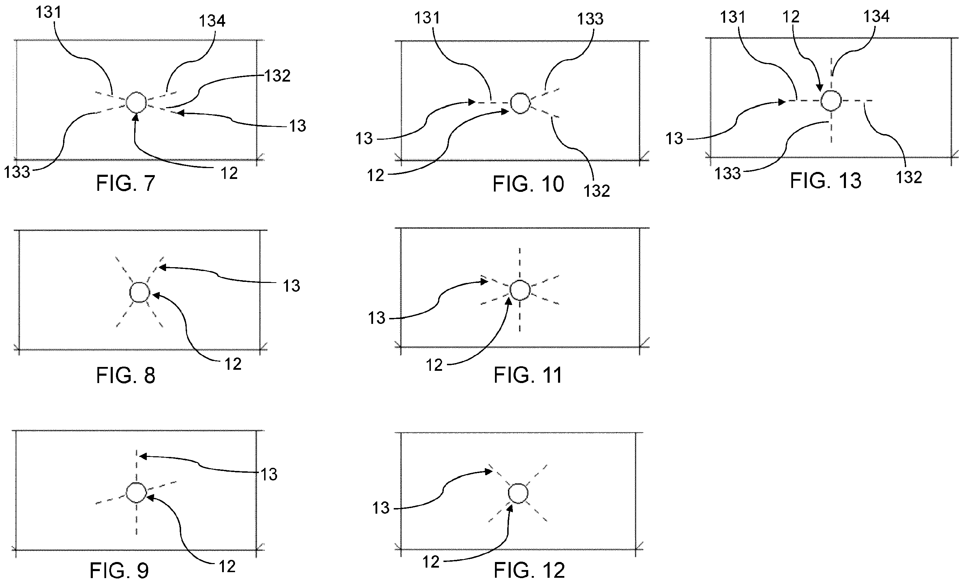

According to an embodiment of the present disclosure illustrated in Figure 10, the line of weakness 13 includes (precisely) three portions positioned in a Y configuration. In this embodiment, each of the the first portion 131, second portion 132 and third portion 133 extend along a correspondent straight line; the straight lines of the first portion 131, second portion 132 and third portion 133 are incident to each other and the pre-laminated opening 12 is located at the crossing between them.

According to an embodiment of the present disclosure illustrated in Figure 11, the line of weakness 13 includes (precisely) six portions departing from the pre-laminated opening 12 and arranged at an angle one with respect to the other.

According to one or more embodiments, the pre-laminated opening 12 is shaped as a circle (namely, has a circular or round shape). Preferably, a length of each of the first portion 131 and second portion 132 is equal to or greater than a diameter of the circle-shaped pre-laminated opening 12. Preferably, in the case that the line of weakness 13 also includes the third portion 133 and/or fourth portion 134, also a length of the third portion 133 and/or fourth portion 134 is equal to or greater than a diameter of the circle-shaped pre-laminated opening 12.

According to one or more embodiments, the pre-laminated opening 12 has a X or a Y shape. In particular, the pre-laminated opening 12 may include a central portion 120 and a plurality of peripheral portions extending from the central portion and angularly distanced from each other. More in particular, the pre-laminated opening 12 may include a first peripheral portion 121, a second peripheral portion 122, a third peripheral portion 123 and possibly a fourth peripheral portion 124, angularly distanced from each other. Each of said first peripheral portion 121, second peripheral portion 122, third peripheral portion 123 and, if present, fourth peripheral portion 124 extend from the central portion 120. Preferably, the first portion 131 of the line of weakness 13 extends from the first peripheral portion 121 of the pre-laminated opening 12, the second portion 132 of the line of weakness 13 extends from the second peripheral portion 122 of the pre-laminated opening 12, the third portion 133 of the line of weakness 13 extends from the third peripheral portion 123 of the pre-laminated opening 12 (and, if present, the fourth portion 134 of the line of weakness 13 extends from the fourth peripheral portion 124 of the pre-laminated opening 12).

Preferably, a length of the first portion 131 of the line of weakness 13 is less than a length of the first peripheral portion 121 of the pre-laminated opening 12; a length of the second portion 132 of the line of weakness 13 is less than a length of the second peripheral portion 122 of the pre-laminated opening 12; a length of the third portion 133 of the line of weakness 13 is less than a length of the third peripheral portion 123 of the pre-laminated opening 12; a length of the fourth portion 134 of the line of weakness 13 (if present) is less than a length of the fourth peripheral portion 124 of the pre-laminated opening 12 (if present).

According to one or more embodiments, the packaging material M includes a plurality of crease lines 15. The crease lines 15 are configured to define an edge between two adjacent walls of a sealed package formed by folding and sealing the packaging material M. In particular, the package 1 is obtained by folding the packaging material M along the crease lines 15. Preferably, the crease lines 15 are obtained by pressing the base layer 10 between a pair of tools such that the base layer 10 is locally deformed, prior to coupling the base layer 10 with the lamination layers 11. Preferably, the pre-laminated opening 12 is not intersected by any one of said crease lines 15. In other words, the crease lines 15 are at a distance from the pre-laminated opening 12. As a consequence, in the formed package 1, the pre-laminated opening 12 is completely included in the top wall 5 and does not extend in any one of the lateral walls 7.

According to one or more embodiment, the packaging material M includes an additional pre-laminated opening 14 which is formed by an additional through slot provided in said base layer 10 and covered by one or more of said lamination layers 11. The additional pre-laminated opening 14 is configured to receive a straw connected to the opening device. Said straw is configured to allow air to exit the package during outpouring of the liquid food product through the pre-laminated hole and the opening device coupled thereto. Preferably, said additional pre-laminated opening 14 is shaped as a circle. Preferably, the pre-laminated opening 12 and the additional pre-laminated opening 14 are located in an area of the sheet not crossed by any crease lines 15; as a consequence, the pre-laminated opening 12 and the additional pre-laminated opening 14 will both be included in the top wall 5 of the formed package 1.

## Claims

1. A multilayer sheet of packaging material (M) for producing a sealed package (1) of a pourable food product, said packaging material (M) comprising:
- at least one base layer (10) for imparting stiffness;
- a plurality of lamination layers (11) applied to and covering both sides of the base layer (10);
- a pre-laminated opening (12) which is formed by a through slot provided in said base layer (10) and covered by one or more of said lamination layers (11), wherein said pre-laminated opening (12) is configured to receive an opening device for outpouring the pourable food product;
**characterized in that** it further comprises a line of weakness (13) in said base layer (10), wherein in an unruptured condition of the pre-laminated opening (12), the pre-laminated opening (12) is completely covered by said one or more lamination layers (11) and the base layer (10) is at least partially cut along said line of weakness (13).

2. A multilayer sheet of packaging material (M) according to claim 1, wherein said plurality of lamination layers (11) includes a first lamination layer applied to a first side of the base layer (10) and a second lamination layer applied to a second side of the base layer (11), wherein, at the pre-laminated opening (12), the first lamination layer and the second lamination layer are sealed together.

3. A multilayer sheet of packaging material (M) according to claim 1 or 2, wherein said line of weakness (13) includes a first portion (131) and a second portion (132) extending from the pre-laminated opening (12), and wherein the pre-laminated opening (12) is interposed between the first portion (131) and the second portion (132).

4. A multilayer sheet of packaging material (M) according to 3, wherein the sheet of packaging material (M) is extended in a plane, wherein said first portion (131) and said second portion (132) are elongated along said plane.

5. A multilayer sheet of packaging material (M) according to claim 3, wherein said line of weakness (13) includes a third portion (133) extending from the pre-laminated opening (12), and/or
wherein said line of weakness (13) includes a fourth portion (134) extending from the pre-laminated opening (12) and wherein the pre-laminated opening (12) is further interposed between the third portion (133) and the fourth portion (134).

6. A multilayer sheet of packaging material (M) according to claim 5, wherein the first portion (131) and the second portion (132) of the line of weakness (13) are aligned along a first straight line and the third portion (133) and the fourth portion (134) of the line of weakness (13) are aligned along a second straight line, wherein the first straight line and the second straight line are incident to each other and wherein the pre-laminated opening (12) is located at the crossing between the first straight line and the second straight line.

7. A multilayer sheet of packaging material (M) according to any one of previous claims 3 to 6, wherein the pre-laminated opening (12) is shaped as a circle.

8. A multilayer sheet of packaging material (M) according to claim 7, wherein a length of each of the first portion (131) and second portion (132) is equal to or greater than a diameter of the circle-shaped pre-laminated opening (12) .

9. A multilayer sheet of packaging material (M) according to claim 8, wherein said line of weakness (13) includes a third portion (133) and/or a fourth portion (134) extending from the pre-laminated opening (12), wherein a length of the third portion (133) and/or fourth portion (134) is equal to or greater than a diameter of the circle-shaped pre-laminated opening (12).

10. A multilayer sheet of packaging material (M) according to any of the previous claims 1 to 6, wherein the pre-laminated opening (12) includes:
- a central portion (120);
- a first peripheral portion (121), a second peripheral portion (122), and a third peripheral portion (123), angularly distanced from each other, wherein each of said first peripheral portion (121), second peripheral portion (122) and third peripheral portion (123) extend from the central portion (120).

11. A multilayer sheet of packaging material (M) according to claim 10, wherein said line of weakness (13) includes a first portion (131), a second portion (132), and a third portion (133), wherein
the first portion (131) of the line of weakness (13) extends from the first peripheral portion (121) of the pre-laminated opening (12),
the second portion (132) of the line of weakness (13) extends from the second peripheral portion (122) of the pre-laminated opening (12),
the third portion (133) of the line of weakness (13) extends from the third peripheral portion (123) of the pre-laminated opening (12).

12. A multilayer sheet of packaging material (M) according to claim 10 or 11, wherein the pre-laminated opening (12) further includes a fourth peripheral portion (124) extending from the central portion (120) and being angularly distanced from each of said first peripheral portion (121), second peripheral portion (122) and third peripheral portion (123), wherein the line of weakness (13) includes a fourth portion (134) extending from the fourth peripheral portion (124) of the pre-laminated opening (12).

13. A multilayer sheet of packaging material (M) according to any one of the previous claims, including a plurality of crease lines (15) configured to define an edge between two adjacent walls of a sealed package formed by folding and sealing the packaging material (M), wherein the pre-laminated opening (12) is not intersected by any one of said crease lines (15).

14. A multilayer sheet of packaging material (M) according to any one of the previous claims, wherein along said line of weakness (13) the base layer (10) is cut dotted.

15. A multilayer sheet of packaging material (M) according to any one of the previous claims, wherein the line of weakness (13) has a depth in said base layer (10) that is smaller than a thickness of the base layer (10).

16. A multilayer sheet of packaging material (M) according to any one of the previous claims, including an additional pre-laminated opening (14) which is formed by an additional through slot provided in said base layer (10) and covered by one or more of said lamination layers (11).

17. A multilayer sheet of packaging material (M) according to any one of the previous claims, wherein said line of weakness (13) includes at least a portion that extends parallel to a plane defined by the sheet of packaging material (M), from a first end to a second end, opposite to the first end, wherein the first end is closer to the pre-laminated opening (12) than the second end, and the second end is distanced from the pre-laminated opening (12).

18. A sealed package (1) for pourable food products, formed by folding and sealing a multilayer sheet of packaging material (M) as claimed in any one of the previous claims, the sealed package (1) being configured to receive an opening device for outpouring the pourable food product, wherein the pre-laminated opening (12) is configured to be ruptured by a cutter of the opening device, so as to define a pour opening.

## Amended claims

### Amended claims in accordance with Rule 137(2) EPC.

1. A multilayer sheet of packaging material (M) for producing a sealed package (1) of a pourable food product, said packaging material (M) comprising:
- at least one base layer (10) for imparting stiffness;
- a plurality of lamination layers (11) applied to and covering both sides of the base layer (10);
- a pre-laminated opening (12) which is formed by a through slot provided in said base layer (10) and covered by one or more of said lamination layers (11), wherein said pre-laminated opening (12) is configured to receive an opening device for outpouring the pourable food product;
**characterized in that** it further comprises a line of weakness (13) in said base layer (10), wherein said line of weakness (13) includes at least a portion that extends parallel to a plane defined by the sheet of packaging material (M), from a first end to a second end, opposite to the first end, wherein the first end is closer to the pre-laminated opening (12) than the second end, and the second end is distanced from the pre-laminated opening (12),
wherein in an unruptured condition of the pre-laminated opening (12), the pre-laminated opening (12) is completely covered by said one or more lamination layers (11) and the base layer (10) is at least partially cut along said line of weakness (13).

2. A multilayer sheet of packaging material (M) according to claim 1, wherein said plurality of lamination layers (11) includes a first lamination layer applied to a first side of the base layer (10) and a second lamination layer applied to a second side of the base layer (11), wherein, at the pre-laminated opening (12), the first lamination layer and the second lamination layer are sealed together.

3. A multilayer sheet of packaging material (M) according to claim 1 or 2, wherein said line of weakness (13) includes a first portion (131) and a second portion (132) extending from the pre-laminated opening (12), and wherein the pre-laminated opening (12) is interposed between the first portion (131) and the second portion (132).

4. A multilayer sheet of packaging material (M) according to 3, wherein the sheet of packaging material (M) is extended in a plane, wherein said first portion (131) and said second portion (132) are elongated along said plane.

5. A multilayer sheet of packaging material (M) according to claim 3, wherein said line of weakness (13) includes a third portion (133) extending from the pre-laminated opening (12), and/or
wherein said line of weakness (13) includes a fourth portion (134) extending from the pre-laminated opening (12) and wherein the pre-laminated opening (12) is further interposed between the third portion (133) and the fourth portion (134).

6. A multilayer sheet of packaging material (M) according to claim 5, wherein the first portion (131) and the second portion (132) of the line of weakness (13) are aligned along a first straight line and the third portion (133) and the fourth portion (134) of the line of weakness (13) are aligned along a second straight line, wherein the first straight line and the second straight line are incident to each other and wherein the pre-laminated opening (12) is located at the crossing between the first straight line and the second straight line.

7. A multilayer sheet of packaging material (M) according to any one of previous claims 3 to 6, wherein the pre-laminated opening (12) is shaped as a circle.

8. A multilayer sheet of packaging material (M) according to claim 7, wherein a length of each of the first portion (131) and second portion (132) is equal to or greater than a diameter of the circle-shaped pre-laminated opening (12) .

9. A multilayer sheet of packaging material (M) according to claim 8, wherein said line of weakness (13) includes a third portion (133) and/or a fourth portion (134) extending from the pre-laminated opening (12), wherein a length of the third portion (133) and/or fourth portion (134) is equal to or greater than a diameter of the circle-shaped pre-laminated opening (12).

10. A multilayer sheet of packaging material (M) according to any of the previous claims 1 to 6, wherein the pre-laminated opening (12) includes:
- a central portion (120);
- a first peripheral portion (121), a second peripheral portion (122), and a third peripheral portion (123), angularly distanced from each other, wherein each of said first peripheral portion (121), second peripheral portion (122) and third peripheral portion (123) extend from the central portion (120).

11. A multilayer sheet of packaging material (M) according to claim 10, wherein said line of weakness (13) includes a first portion (131), a second portion (132), and a third portion (133), wherein
the first portion (131) of the line of weakness (13) extends from the first peripheral portion (121) of the pre-laminated opening (12),
the second portion (132) of the line of weakness (13) extends from the second peripheral portion (122) of the pre-laminated opening (12),
the third portion (133) of the line of weakness (13) extends from the third peripheral portion (123) of the pre-laminated opening (12).

12. A multilayer sheet of packaging material (M) according to claim 10 or 11, wherein the pre-laminated opening (12) further includes a fourth peripheral portion (124) extending from the central portion (120) and being angularly distanced from each of said first peripheral portion (121), second peripheral portion (122) and third peripheral portion (123), wherein the line of weakness (13) includes a fourth portion (134) extending from the fourth peripheral portion (124) of the pre-laminated opening (12).

13. A multilayer sheet of packaging material (M) according to any one of the previous claims, including a plurality of crease lines (15) configured to define an edge between two adjacent walls of a sealed package formed by folding and sealing the packaging material (M), wherein the pre-laminated opening (12) is not intersected by any one of said crease lines (15).

14. A multilayer sheet of packaging material (M) according to any one of the previous claims, wherein along said line of weakness (13) the base layer (10) is cut dotted.

15. A multilayer sheet of packaging material (M) according to any one of the previous claims, wherein the line of weakness (13) has a depth in said base layer (10) that is smaller than a thickness of the base layer (10).

16. A multilayer sheet of packaging material (M) according to any one of the previous claims, including an additional pre-laminated opening (14) which is formed by an additional through slot provided in said base layer (10) and covered by one or more of said lamination layers (11).

17. A sealed package (1) for pourable food products, formed by folding and sealing a multilayer sheet of packaging material (M) as claimed in any one of the previous claims, the sealed package (1) being configured to receive an opening device for outpouring the pourable food product, wherein the pre-laminated opening (12) is configured to be ruptured by a cutter of the opening device, so as to define a pour opening.
